# EUROPEAN PATENT SPECIFICATION

(11) **EP 2 397 419 B1**
(45) Date of publication and mention of the grant of the patent: **14.01.2015**
(21) Application number: 10166500.8
(22) Date of filing: 18.06.2010
(51) Int. Cl.: B65D 51/24, B65D 81/24, A23L 3/00, C01B 3/02

(54) **Hydrogen generating, oxygen scavenging closure cap**
Wasserstofferzeugende sauerstoffabfangende Verschlusskappe
Capuchon désoxygénant produisant de l'hydrogène

(43) Date of publication of application: 21.12.2011
(73) Proprietor: La Seda de Barcelona S.A., 08820 Barcelona (ES)
(72) Inventor: Krikor Hilde, B 2100 DEURNE (BE); Verheyen, Luc, B-2960 BRECHT (BE)
(74) Representative: Matkowska, Franck

(56) References cited:
- EP-A2- 0 466 515
- WO-A1-2008/090354

## Description

### Technical Field

The invention relates to a closure cap that is capable of generating molecular hydrogen from a chemical reaction with water, and that can be used for closing a container and for scavenging oxygen. The container can be used for storing any oxygen-sensitive substance that can be altered by oxygen, and in particular a food substance or a beverage such as for example juice, beer, wine,...

### Prior Art

Aromatic polyester resins, and in particular polyethylene terephthalate (PET), are widely used in the packaging industry for making various types containers for storing any substance, and in particular for storing food substance or a beverage.

PET has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

In order to improve the gas barrier properties of packaging articles, in particular oxygen and/or carbon dioxide barrier properties, it is now common to use multilayered packaging articles, and in particular multilayered containers, that include at least one barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to O₂ and/or CO₂, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise an oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other known metal salts used for making such composition are rhodium, manganese, copper, iron.

With multilayered packaging articles having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered packaging article can be used for storing oxygen-sensitive products, such as beer, fruit juice, or the like. The shelf life of the packaged product widely depends on the amount of polyamide in the packaging article and of the thickness of the barrier layer.

In return, the use of gas barrier polymer, like polyamide in the container wall renders the recycling of the container more difficult. In addition, when polyamide is used, in particular for making a monolayer container, there is a risk of formation of haze in the container wall due to the orientation of the polyamide during the process for making the container. Said haze formation in the container wall is obviously detrimental for all the applications where it is important to have a transparent container, - i.e. a container whose wall has no eye-visible whitening or haze, in order to have a better appearance of the packaged product.

In order to improve the O₂ scavenging performance of a plastic container, it is also known to close the container with a closure cap comprising a layer having O₂ scavenging properties.

Another recent route for making a container having oxygen scavenging properties is described in PCT application WO 2008/090354. The O₂ scavenging properties are obtained by using an active substance, such as for example a hydride, that is capable of chemically reacting with water and generating molecular hydrogen, and by making said molecular hydrogen react with oxygen which may ingress the container. In the variant of figure 4 of s PCT application WO 2008/090354, said active substance is incorporated in a plug that is positioned in a cap. In such a variant, the active substance can however prejudicially contaminate the product stored in the container.

Document EP 0 466 515 A2 discloses a closure cap with an oxygen scavenger covered by a liner.

### Objective of the invention

A general and main objective of the invention is to propose an active closure cap for a container, said cap being suitable for scavenging oxygen that may penetrate inside the container, notably through the permeable wall of the container, or oxygen that is present in the head space of the container.

A more particular objective of the invention is to propose a closure cap, that includes an active substance capable of chemically reacting with water and generating molecular hydrogen into a container, and that can be in contact with the content of the container without any risk of contamination of the said substance by the active substance.

A more particular objective of the invention is to propose a closure cap, that includes an active substance capable of chemically reacting with water and generating molecular hydrogen into a container, and that can be easily manufactured.

### Summary of the invention

These objectives are achieved by the closure cap of claim 1.

### Brief description of the drawings

Other characteristics and advantages of the invention will appear more clearly on reading the following description of several closure cap embodiments, which description is given by way of non-limiting example and with reference to the accompanying drawings, in which:
- Figure 1 is a view in cross-section of a first variant of closure cap fitted onto a container neck,
- Figure 2 to 6 are partial views in cross-section of five other variants of closure cap.

### Detailed description

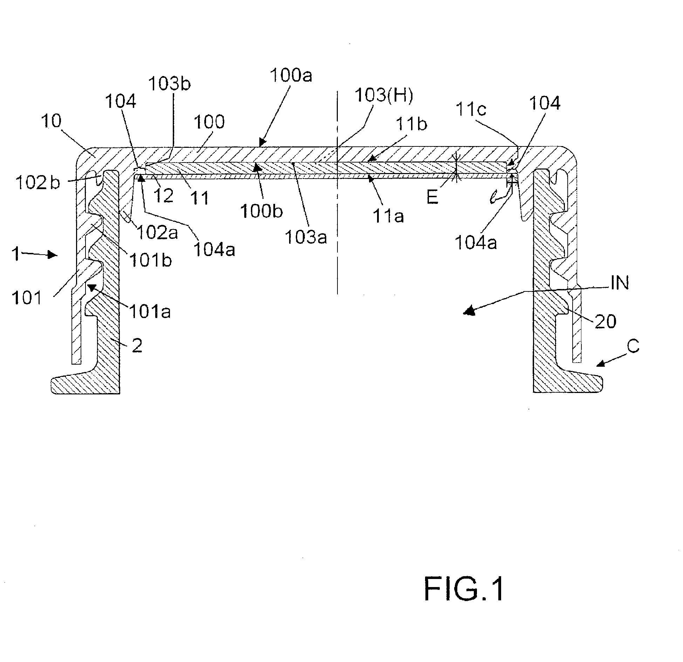

In reference to figure 1, a closure cap 1 of the invention is fitted onto a standard neck 2 of a plastic container C comprising a top opening (container mouth), like for example a bottle neck. This top opening of the neck 2 is knowingly used for filling the container with a product and/or for pouring the product outside the container. In this particular embodiment, the closure cap 1 is screwed on the container neck 2. In another variant, the closure cap 1 could be snapped on the container neck 2.

The material and the shape of the container are not important. In particular the container can be for example any plastic container or any cardboard container. ; the container can be for example a bottle-shaped container, a flask, a jar, a tube, a bag, a pouch.Within the scope of the invention, the container can be rigid, semi rigid or flexible. The containers contemplated in the present invention may be either of a monolayer or a multilayer construction. Suitable materials which may be used as a layer or part of one or more layers in either monolayer or multilayer containers include polyester (including but not limited to PET), polyetheresters, polyesteramides, polyurethanes, polyimides, polyureas, polyamideimides, polyamides, polyphenyleneoxide, phenoxy resins, epoxy resins, polyolefins (including but not limited to polypropylene and polyethylene), polyacrylates, polystyrene, polyvinyls (including but not limited to polyvinyl chloride)) and combinations thereof. All of the aforementioned polymers may be in any desired combination thereof.

The container C can be manufactured by using any method known in the art, including but not limited to injection moulding, injection blow moulding (IBM), injection stretch-blow moulding (ISBM), extrusion blow moulding, thermoforming, rotational moulding, folding.

This closure cap 1 comprises three main components: a closure shell 10, an active layer 11, and a liner 12.

### Closure shell 10

The closure shell 10 is a plastic piece that comprises a top wall 100 and a lateral wall 101. The top wall 100 forms a disc and comprises an outer face 100a and an inner face 100b that is intended in use to be oriented toward the inside (IN) of the container (figure 1). The lateral wall 101 is substantially perpendicular to the top wall and forms a substantially cylindrical lateral skirt 101. The inner face 101 a of this skirt 101 comprises a screwing thread 101 b that can cooperate with the screwing thread 20 of the neck 2 for securing the closure cap 1 onto the neck 2.

The closure shell 10 also comprises sealing means for substantially hermetically closing the top opening of the container neck 2, and avoiding any leakage of the product contained in the container. In this particular example, these sealing means comprise an inner cylindrical sealing lip 102a and an outer cylindrical sealing lip 102b, that extend both from the inner face 100b of the top wall 100. The outer sealing lip 102b is positioned between the inner sealing lip 102a and the skirt 101. These sealing lips 102a and 102b can be replaced by any sealing element that cooperates with the container neck for sealing the top opening of the neck 2, once the closure cap 1 is fitted onto the neck 2.

The inner face 100b of the top wall 100 comprises a central recess 103 that is made in the thickness of the top wall. This recess 103 is delimited by a bottom wall 103a and a peripheral lateral wall 103b. The lateral wall 103b extends downwardly from the bottom wall 103a and surrounds the bottom wall 103a.This recess 103 forms a housing H for the active layer 11.

The closure shell 10 further comprises a shoulder portion 104 that surrounds the recess 103. Said shoulder portion 104 joins the lateral wall 103b of the recess 103 to the internal sealing lip 102a.

The material of the closure shell 10 can be any known thermoplastic material that can be moulded in a mould, and more particularly any known thermoplastic material that can be processed by injection moulding. Preferably, the closure shell is made from a polyolefin, like for example polypropylene, polyethylene, polyethylene terephthalate or a blend thereof. A good candidate for making the closure shell 10 is HDPE (High Density Polyethylene).

### Active layer 11

The active layer 11 is for example a disk-shaped layer, with an inner face 11a, an outer face 11 b, and a circumferential edge 11 c. The active layer 11 is positioned inside the recess 103 of the closure shell 10 and is entirely contained in the recess 103. More especially, the active layer 11 completely fills the recess 103 without protruding outside the recess 103, the thickness E of the active layer 11 being substantially equal to the depth of the recess 103. The inner face 11 a of the active layer 11 (i.e. face 11 a oriented towards the inside IN of the container) is thus flush with the inner face 104a of the shoulder portion 104, and there is no overlap of the active layer 11 outside the recess 103, and in particular no overlap of the material of the active layer 11 onto the inner face 104a of the shoulder portion 104.

The outer face 11 b and the circumferential edge 11c of the active layer 11 are in contact with, and are bonded to, respectively the bottom wall 103a and lateral wall 103b of the recess 103 of the shell 10. The active layer 11 is preferably only thermal bonded to the shell 10, i.e. without using an additional adhesive layer in-between.

The active layer 11 is capable of chemically reacting with water and generating molecular hydrogen from this reaction with water. The material of the active layer 11 can be made of or can comprise any active substance forming such a hydrogen source. Preferably, but not only, said active substance suitable for the release of molecular hydrogen as a result of contact with water is one of the active substances described in PCT application WO2008/090354.

In one preferred embodiment, the material of the active layer 11 comprises a polymeric matrix containing the active substance which is incorporated in the polymer matrix and which is capable of chemically reacting with water and generating molecular hydrogen from this reaction with water.

Suitable polymeric matrix materials include but are not limited to low density polyethylene, in particular linear low density polyethylene, high density polyethylene, polypropylene, ethylene vinyl acetate, thermoplastic elastomers (TPEs),like styrenic block copolymers, polyolefin blends, elastomeric alloys, thermoplasticpolyurethanes, thermoplastic copolyester, and thermoplastic polyamides, or blend thereof. In particular a good candidate among thermoplastic elastomer materials is a material comprising styrenic block copolymers consisting of polystyrene blocks and rubber blocks, such as for example SEBS, SEPS, SBS, SBC.

The ratio of the weight of active substance to matrix material may be at least 0.01, preferably at least 0.02. The matrix may be a polymeric matrix and said active substance may be dispersed therein. In general, once an active material is dispersed into a polymer, the rate of release of hydrogen is limited by either the permeation rate of water into the polymeric matrix and/or by the solubility of water in the chosen matrix. Thus, selection of polymeric materials based on the permeability or solubility of water in the polymer allows one to readily control the rate of release of molecular hydrogen from any number of active substances.

The polymeric matrix may include at least 1 wt% of active substance, preferably at least 2 wt%. The polymeric matrix may include less than 20 wt% of active substance. Suitably, the polymeric matrix includes 1-16 wt%, preferably 4-12wt% of active substance. The balance of material in the polymeric matrix may predominantly comprise a said polymeric material.

Active substances suitable for the release of molecular hydrogen as a result of contact with water are preferably the ones described in PCT application WO2008/090354. In particular, said active substance may comprise a metal and/or a hydride. Said metal may be selected from sodium, lithium, potassium, magnesium, zinc or aluminum. A hydride may be inorganic, for example it may comprise a metal hydride or borohydride; or it may be organic.

More particularly, active substances include but are not limited to: sodium metal, lithium metal, potassium metal, calcium metal, sodium hydride, lithium hydride, potassium hydride, calcium hydride, magnesium hydride, sodium borohydride, and lithium borohydride.

Where the rate of reaction between the active substance and water is too slow, the addition of hydrolysis catalysts and/or agents in the polymeric matrix can be used. For example, the rate of hydrolysis of silicon hydrides may be enhanced by the use of hydroxide or fluoride ions, transition metal salts, or noble metal catalysts.

The active substance may also be the polymeric matrix. For example, polymeric silicon hydrides such as poly(methylhydro)siloxane provide both a polymeric matrix and an active substance capable of releasing molecular hydrogen when in contact with moisture.

### Liner 12

The liner 12 is closing the recess 103 of the shell 10. The liner 12 is in contact with and is bonded to the inner face 11 a of the active layer 11 and to the shoulder portion 104 of the shell 10 on the whole periphery of the active layer 11.

In this particular variant of figure 1, the liner 12 is also in contact with and is bonded on its whole periphery to the internal sealing lip 102a of the closure shell 10. This characteristic is however not mandatory.

When the closure cap 1 is fitted onto a container C, this liner 12 is facing the inside IN of the container C, and forms a protective barrier that prevents the product stored in the container from contacting the active layer 11 and that prevents the active substance (H₂ generator) of the active layer 11 from migrating into the container. This liner 12 also to limit the ingress of water in contact with the active layer 11, and thereby enables to obtain a controlled release of molecular hydrogen by the active layer 11 over a prolonged period of time.

Preferably, the liner 12 is only thermally bonded to the active layer 11 and to the shell 10, i.e. without using an additional adhesive layer.

The liner 12 can be a monolayer or a multilayer component. The material of the liner 12 is preferably selected in order to obtain a liner 12 that:
(i) is heat bondable to the closure shell and to the active layer 11, and
(ii) is permeable to water vapour and to molecular hydrogen.

The material of the liner 12 can be any polymeric material that enables to obtain characteristics (i) and (ii). The materials of the liner 12 include but are not limited to low density polyethylene, in particular linear low density polyethylene, high density polyethylene, polypropylene, ethylene vinyl acetate, thermoplastic elastomers (TPEs), like styrenic block copolymers, polyolefin blends, elastomeric alloys, thermoplasticpolyurethanes, thermoplastic copolyester, and thermoplastic polyamides, or blend thereof. In particular a good candidate among thermoplastic elastomer materials is a material comprising styrenic block copolymers consisting of polystyrene blocks and rubber blocks, such as for example SEBS, SEPS, SBS, SBC.

### Bonding of the liner 12 with the closure shell 10

An efficient bonding between the liner 12 and the closure shell 10 is very important, in order to avoid delamination problems that would detrimentally lead to a risk of leakage and contact of the active layer 11 with the product stored in the container, and thereby to a risk of contamination of the product.

This efficient bonding is preferably obtained by using materials for the closure shell 10 and the liner 12 that are compatible in terms of thermal bonding, and that enable to achieve a very good thermal bonding of the liner 12 with the shell 10. To this end, the material of the liner 12 and the material of the closure shell 10 comprise, or are made of, at least one identical polymer. The material of the liner 12 can however be a polymeric material that differs from the material of the closure shell 10. In a preferred embodiment, the closure shell 10 was for example in HDPE and the liner 12 was a monolayer liner made of EVA or LLDPE or a thermoplastic elastomer comprising polyolefin blends or SEBS blends.

This efficient bonding is also improved by the particular structure of the closure cap with a recess 103 containing the active layer 11 and with a shoulder peripheral bonding portion 104. Thanks to the recess 103, the active layer 11 does not exert onto the liner 12 a mechanical action that would contribute to delaminate the liner 12 from the closure shell 10. The width (I) of the shoulder bonding portion 104 ( figure 1 ) will be selected by one skilled in the art in order to obtain a sufficient bonding area between the liner 12 and the shell 10, and to avoid any risk of delamination during normal use.

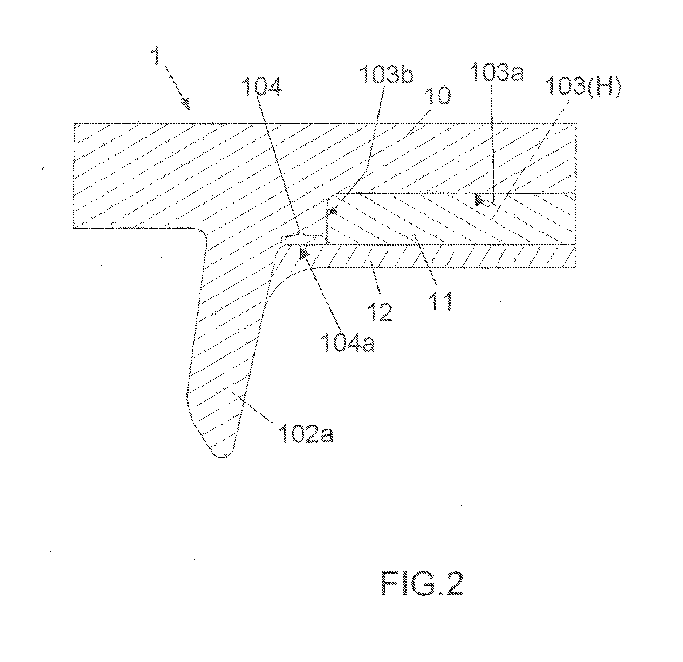

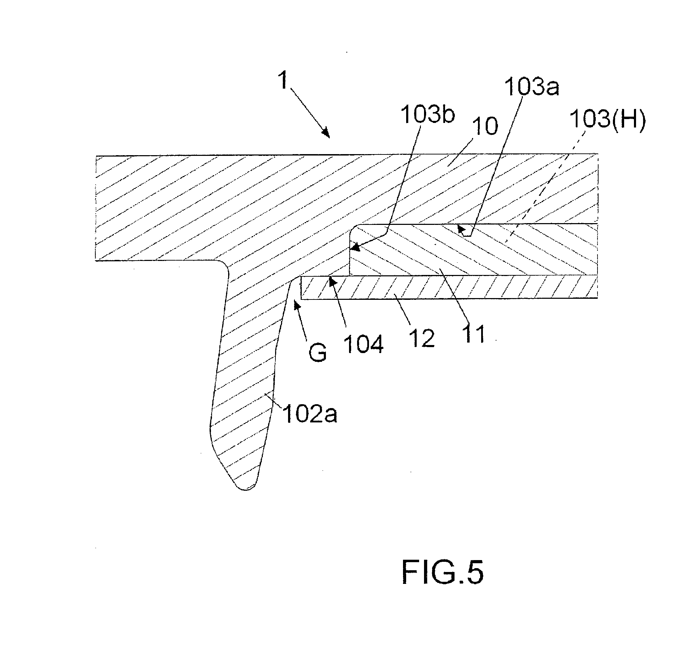

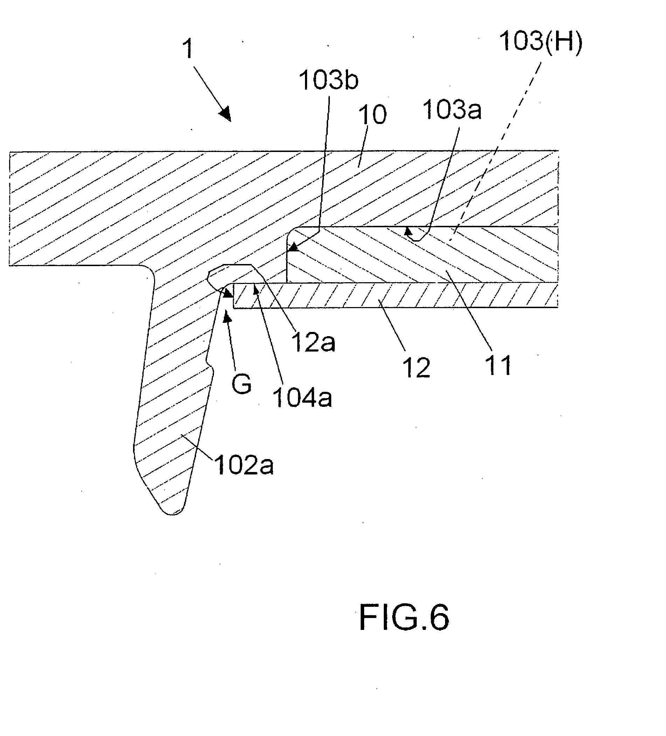

Figures 2 to 6 show other variants for the closure cap.

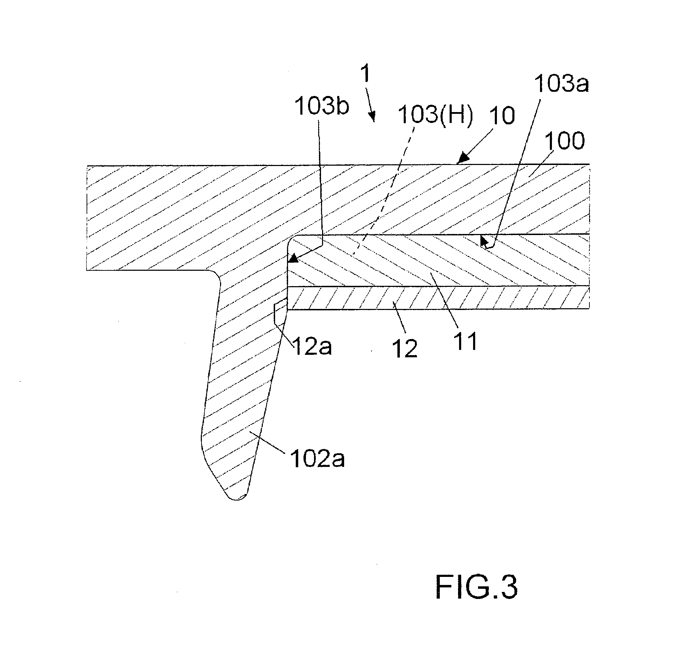

In the variant of figure 3, the top wall 100 of the shell 10 comprises a recess 103, but in contrast with the variant of figures 1, 2, 4, 5 and 6, does not comprise a shoulder bonding portion 104 for bonding the liner 12 to the shell 10. In this variant, the liner 12 is bonded to the shell only on its circumferential edge 12a.

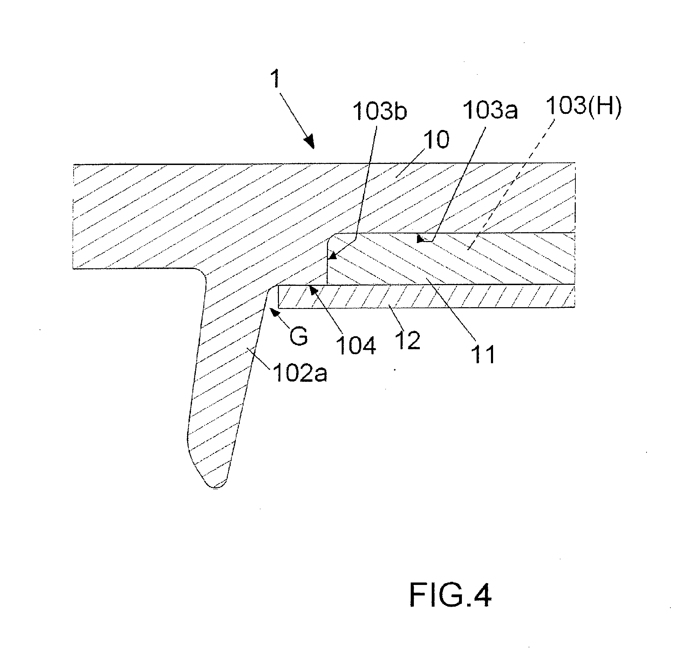

When the liner 12 is in contact with the internal sealing lip 102a (like for example in the variants of figure 1 and 2), there is a risk that the liner 12 exerts a mechanical constraint on the lips that leads to a deformation of the lip 102a. Such a deformation can provoke leakage problems when the cap is fitted onto a container. To avoid this problem, in the variants of figures 4 to 6, the liner 12 is advantageously not in contact with the internal sealing lip 102a, and there is a gap G between the circumferential edge 12a of the liner 12 and the internal sealing lip 102a.

### Manufacturing process

The closure 1 can be for easily and quickly manufactured by using an over injection technique.

In a first step, the closure shell 10 is injection moulded in a mould. In a second step, the active layer 11 is over injected onto the closure shell. Then in a third step, the liner 12 is over injected onto the closure shell 10 and active layer 11.

During injection, the active layer 11 is compressed in the injection mould. When this mould is opened, a decompression of the active layer 11 can occur. In such a case the active layer 11 exerts on the liner 12 a pressure that pushes the liner 12 away from the shell 10. The bonding of the liner 12 is thus less strong, which can lead to detrimental delamination problems. To solve this problem, especially (but not only) when the active layer 11 comprises a thermoplastic elastomer, it is preferable that the hardness of the active layer 11, for example measured with a durometer according to ASTM D2240, is not less than Shore A hardness 40.

### O ₂ scavenging

In use, when the container C is containing a product, in particular an oxygen-sensitive product, and is closed by the closure cap 1, the liner 12 avoids any contact between the active layer 11 and the product stored in the container C. The water vapour contained in the head space of container penetrates through the liner 12 and enters in contact with the active layer 11.

As a result, the active substance of the active layer 11 produces molecular hydrogen that migrates through the liner 12 and penetrates in the container head space. This molecular hydrogen combines with oxygen which may have entered in the container through its permeable wall. As a result a reaction between hydrogen and oxygen takes place, and water is produced. This oxygen scavenging reaction can be catalysed by a catalyst incorporated in the closure cap 1 and/or in the container wall and/or in the container neck.

A large number of catalysts are known to catalyze the reaction of hydrogen with oxygen, including many transition metals, metal borides (such as nickel boride), metal carbides (such as titanium carbide), metal nitrides (such as titanium nitride), and transition metal salts and complexes. Group VIII metals are particularly efficacious. Of the Group VIII metals, palladium and platinum are especially preferred because of their low toxicity and extreme efficiency in catalyzing the conversion of hydrogen and oxygen to water with little or no byproduct formation. The catalyst is preferably a redox catalyst.

Preferably, but not necessarily, for facilitating the recycling of the closure 1, the closure cap 1 has a density less than 1, and the closure shell 10, the active layer 11, and the liner 12, have respectively three different colours in order to visually differentiate them. This is obtained for example by adding a first colorant (for example red) to the polymeric material of the active layer 11, and by .adding a different colorant (for example blue) to the polymeric material of the liner 12, the shell 10 containing for example no colorant and being substantially white. The addition of colorant can be performed prior to injection or during the injection of closure cap components. In a variant, a third colorant (for example green) can be also added to the polymeric material of the shell 10.

## Claims

1. A closure cap (1) comprising a shell (10) that can be fitted onto a container (c) for closing an opening of said container, an active layer (11) that is capable of chemically reacting with water and generating molecular hydrogen, and a liner (12) that is permeable to water vapour and to molecular hydrogen, wherein said active layer (11) has an inner face (11 a), an outer face (11 b) and a circumferential edge (11c), wherein the shell (10) comprises a top wall (100) having a recess (103) that forms a housing (H) or forming a housing (H) with an internal sealing lip (102a), and the active layer (11) is entirely contained in said housing (H), wherein the outer face (11b) and the circumferential edge (11c) of the active layer (11) are in contact with the shell (10) and are bonded to the shell (10), and wherein the liner (12) is closing said recess (103) and is bonded to the shell (10) on the whole periphery of the said recess (103) and to the inner face (11a) of the active layer (11), in such a way that molecular hydrogen produced by the active layer (11) can migrate through the liner (12).

2. The closure of claim 1 wherein the shell (10) comprises a shoulder portion (104) that surrounds the recess (103), and the liner (12) is bonded to the shoulder portion (104) on the whole periphery of the recess (103).

3. The closure of claim 2, wherein the active layer (11) is flush with said shoulder portion (104).

4. The closure of any one of claims 1 to 3, wherein the active layer (11) completely fills the recess (103) without protruding outside the recess

5. The closure of any one of claims 1 to 4, wherein the shell (10) comprises an inner cylindrical sealing lip (102a) and wherein the liner (12) is not in contact with the inner cylindrical sealing lip (102a).

6. The closure of any one of claims 1 to 5, wherein the active layer (11) and the liner (12) are over injected onto a moulded shell (10).

7. The closure of any one of claims 1 to 2, wherein the active layer (11) comprises an active substance that is capable of chemically reacting with water and generating molecular hydrogen.

8. The closure of claim 7, wherein the active substance is selected from the group comprising Group I, II, and III metals, Group I, II, and III metal hydrides, rare earth metals, rare earth hydrides, alkali metal borohydrides, alkaline earth metal borohydrides, alkali metal aluminum hydrides, silicon hydrides, tin hydrides, and combinations thereof.

9. The closure of claim 7 or 8, wherein the active substance is selected from the group comprising sodium hydride, lithium hydride, sodium borohydride, sodium metal, lithium metal, potassium metal, calcium hydride, magnesium hydride, lithium aluminum hydride, and combinations thereof.

10. The closure of any one of claims 1 to 9, wherein the active layer (11) comprises a polymeric matrix.

11. The closure of claim 10, wherein the polymeric matrix comprises a polyethylene.

12. The closure of claim 10 or 11, wherein the polymeric matrix comprises an ethylene vinyl acetate copolymer.

13. The closure of any one of claims 10 to 12 wherein the polymeric matrix comprises a thermoplastic elastomer.

14. The closure of claim 13 wherein the thermoplastic elastomer comprises a polyolefin blend.

15. The closure of claim 13, wherein the thermoplastic elastomer comprises SEBS.

16. The closure of any one of claims 1 to 15, wherein the hardness of the active layer (11) is not less than Shore A hardness 40.

17. The closure of any one of claims 1 to 16, wherein the liner (12) comprises a polyethylene.

18. The closure of any one of claims 1 to 17, wherein the liner (12) comprises a thermoplastic elastomer.

19. The closure of claim 18, wherein the thermoplastic elastomer comprises a polyolefin blend.

20. The closure of claim 18, wherein the thermoplastic elastomer comprises SEBS.

21. The closure of any one of claims 1 to 20 wherein the liner (12) comprises an ethylene vinyl acetate copolymer.

22. The closure of any one of claims 1 to 21, wherein the shell (10) is made of a polymeric material comprising a polyolefin.

23. The closure of any one of claims 1 to 22, wherein the material of the liner (12) and the material of the closure shell (10) comprise, or are made of, at least one identical polymer.

24. The closure of any one of claims 1 to 23, wherein the liner (12) is only thermal bonded to the closure shell (10) and to the active layer (11).

25. The closure of any one of claims 1 to 24, wherein the shell (10), the active layer (11), and the liner (12) have respectively three different colours in order to visually differentiate them.

26. The closure of any one of claims 1 to 25 having a density less than 1.

27. An assembly comprising a plastic container and a closure cap, wherein the closure cap (1) is the one defined in any one of the preceding claims.

28. The assembly of claim 27 wherein the plastic container and/or the closure cap (1) comprises a catalyst for promoting a reaction between molecular hydrogen and molecular oxygen.

## Patentansprüche

1. Ein Verschlussdeckel (1) mit einer Schale (10), die auf einen Behälter (C) aufgebracht werden kann, um eine Öffnung dieses Behälters zu verschließen, mit einer aktiven Schicht (11), die fähig ist chemisch mit Wasser zu reagieren und molekularen Wasserstoff zu generieren, und mit einem Liner (12), der durchlässig ist für Wasserdampf und molekularen Wasserstoff, wobei die aktive Schicht (11) eine innere Seite (11a), eine äußere Seite (11b) und einen umlaufenden Rand (11c) aufweist, und wobei die Schale (10) aufweist eine obere Wand (100) mit einer Vertiefung (103), die eine Aufnahme oder Einhausung (H) bildet oder mit einer internen Dichtlippe (102a) eine Aufnahme oder Einhausung gebildet ist, und die aktive Schicht (11) vollständig in der Aufnahme oder Einhausung aufgenommen ist, wobei die äußere Seite (11b) und der umlaufende Rand (11c) der aktiven Schicht (11) sich in Kontakt mit der Schale (10) befinden und mit der Schale (10) verbunden (gebondet) sind, und wobei der Liner (12) die Vertiefung (103) schließt und verbunden ist mit der Schale (10), und zwar entlang des gesamten Umfangs der Vertiefung (103), und verbunden ist mit der inneren Seite (11a) der aktiven Schicht (11), derart, dass von der aktiven Schicht (11) generierter molekularer Wasserstoff durch den Liner (12) migrieren kann.

2. Der Verschluss nach Anspruch 1, wobei die Schale (10) einen Schulterbereich (104) umfasst, der die Vertiefung (103) umgibt, und der Liner (12) verbunden ist mit dem Schulterbereich (104) entlang des gesamten Umfangs der Vertiefung (103).

3. Der Verschluss nach Anspruch 2, wobei die aktive Schicht (11) bündig mit dem Schulterbereich (104) ist.

4. Der Verschluss nach einem der Ansprüche 1 bis 3, wobei die aktive Schicht (11) die Vertiefung (103) komplett ausfüllt, ohne über die Vertiefung über zu stehen.

5. Der Verschluss nach einem der Ansprüche 1 bis 4, wobei die Schale (10) eine innere zylinderförmige Dichtlippe (102a) umfasst, und wobei der Liner (12) die innere zylinderförmige Dichtlippe (102a) nicht berührt.

6. Der Verschluss nach einem der Ansprüche 1 bis 5, wobei die aktive Schicht (11) und der Liner (12) in oder über eine (vor)geformte Schale (10) gespritzt sind.

7. Der Verschluss nach einem der Ansprüche 1 bis 6, wobei die aktive Schicht (11) eine aktive Substanz aufweist, die chemisch mit Wasser reagieren kann und molekularen Wasserstoff bildet.

8. Der Verschluss nach Anspruch 7, wobei die aktive Substanz ausgewählt ist aus der Gruppe der Gruppe I, II und III Metalle, Gruppe I, II und III Metallhydride, Seltenerdmetalle, Seltenerdhydride, Alkalimetallborohydride, Erdalkaliborohydride, Alkalimetallaluminiumhydride, Siliziumhydride, Zinnhydride und Kombinationen davon.

9. Verschluss nach Anspruch 7 oder 8, wobei die aktive Substanz ausgewählt ist aus Natriumhydrid, Lithiumhydrid, Natriumborohydrid, Natriummetall, Lithiummetall, Kaliummetall, Kalziumhydrid, Magnesiumhydrid, Lithiumaluminiumhydrid und Kombinationen davon.

10. Der Verschluss nach einem der Ansprüche 1 bis 9, wobei die aktive Schicht (11) eine polymere Matrix umfasst.

11. Der Verschluss nach Anspruch 10, wobei die polymere Matrix ein Polyethylen umfasst.

12. Der Verschluss nach Anspruch 10 oder 11, wobei die polymere Matrix ein EthylenVinylacetat-Copolymer umfasst.

13. Der Verschluss nach einem der Ansprüche 10 bis 12, wobei die polymere Matrix ein thermoplastisches Elastomer umfasst.

14. Der Verschluss nach Anspruch 13, wobei das thermoplastische Elastomer eine Polyolefinmischung umfasst.

15. Der Verschluss nach Anspruch 13, wobei das thermoplastische Elastomer ein SEBS umfasst.

16. Der Verschluss nach einem der Ansprüche 1 bis 15, wobei die Härte der aktiven Schicht (11) nicht kleiner ist als eine Shore A Härte von 40.

17. Der Verschluss nach einem der Ansprüche 1 bis 16, wobei der Liner (12) ein Polyethylen umfasst.

18. Der Verschluss nach einem der Ansprüche 1 bis 17, wobei der Liner (12) ein thermoplastisches Elastomer umfasst.

19. Der Verschluss nach Anspruch 18, wobei das thermoplastische Elastomer eine Polyolefinmischung umfasst.

20. Der Verschluss nach Anspruch 18, wobei das thermoplastische Elastomer SEBS umfasst.

21. Der Verschluss nach einem der Ansprüche 1 bis 20, wobei der Liner (12) ein EthylenVinylacetat-Copolymer umfasst.

22. Der Verschluss nach einem der Ansprüche 1 bis 21, wobei die Schale (10) aus einem polymeren Material, das ein Polyolefin umfasst, gefertigt ist.

23. Der Verschluss nach einem der Ansprüche 1 bis 22, wobei das Material des Liners (12) und das Material der Verschlussschale (10) zumindest ein identisches Polymer beinhalten oder daraus gefertigt sind.

24. Der Verschluss nach einem der Ansprüche 1 bis 23, wobei der Liner (12) mit der Verschlussschale (10) und der aktiven Schicht (11) nur thermisch verbunden (gebondet) ist.

25. Der Verschluss nach einem der Ansprüche 1 bis 24, wobei die Schale (10), die aktive Schicht (11) und der Liner (12) drei unterschiedliche Farben haben, um sie visuell unterscheiden zu können.

26. Der Verschluss nach einem der Ansprüche 1 bis 25 mit einer Dichte kleiner als 1.

27. Eine Zusammenstellung aus einem Kunststoffbehälter und einem Verschlussdeckel, wobei der Verschlussdeckel (1) einem der vorangegangenen Ansprüche entspricht.

28. Der Aufbau nach Anspruch 27, wobei der Kunststoffbehälter und/oder der Verschlussdeckel (1) einen Katalysator zur Beschleunigung der Reaktion zwischen molekularem Wasserstoff und molekularem Sauerstoff umfasst.

## Revendications

1. Capuchon de fermeture (1) comprenant une coque (10) qui peut être agencée sur un récipient (C) pour fermer et ouvrir ledit récipient, une couche active (11) qui est capable de réagir chimiquement avec l'eau et de générer de l'hydrogène moléculaire, et une garniture (12) qui est perméable à la vapeur d'eau et à l'hydrogène moléculaire, dans lequel ladite couche active (11) présente une face intérieure (11a), une face extérieure (11b) et un bord circonférentiel (11c), dans lequel la coque (10) comprend une paroi supérieure (100) comportant un évidement (103) qui forme un logement (H) ou formant un logement (H) avec une lèvre d'étanchéité interne (102a), et la couche active (11) est entièrement contenue dans ledit logement (H), dans lequel la face extérieure (11b) et le bord circonférentiel (11c) de la couche active (11) sont en contact avec la coque (10) et sont liés à la coque (10), et dans lequel la garniture (12) ferme ledit évidement (103) et est lié à la coque (10) sur la totalité de la périphérie dudit évidement (103) et à la face intérieure (11a) de la couche active (11), de telle sorte que de l'hydrogène moléculaire produit par la couche active (11) puisse migrer à travers la garniture (12).

2. Capuchon selon la revendication 1, dans lequel la coque (10) comprend une partie d'épaulement (104) qui entoure l'évidement (103), et la garniture (12) est lié à la partie d'épaulement (104) sur la totalité de la périphérie de l'évidement (103).

3. Capuchon selon la revendication 2, dans lequel la couche active (11) est à fleur de ladite partie d'épaulement (104).

4. Capuchon selon l'une quelconque des revendications 1 à 3, dans lequel la couche active (11) remplit complètement l'évidement (103) sans faire saillie à l'extérieur de l'évidement.

5. Capuchon selon l'une quelconque des revendications 1 à 4, dans lequel la coque (10) comprend une lèvre d'étanchéité cylindrique intérieure (102a), et dans lequel la garniture (12) n'est pas en contact avec la lèvre d'étanchéité cylindrique intérieure (102a).

6. Capuchon selon l'une quelconque des revendications 1 à 5, dans lequel la couche active (11) et la garniture (12) sont sur-injectés sur une coque moulée (10).

7. Capuchon selon l'une quelconque des revendications 1 à 6, dans lequel la couche active (11) comprend une substance active qui est capable de réagir chimiquement avec l'eau et de générer de l'hydrogène moléculaire.

8. Capuchon selon la revendication 7, dans lequel la substance active est sélectionnée dans le groupe comprenant les métaux des groupes I, II et III, les hydrures des métaux des groupes I, II et III, les métaux des terres rares, des hydrures des métaux des terres rares, des borohydrures de métaux alcalins, des borohydrures des métaux alcalino-terreux, des hydrures d'aluminium de métaux alcalins, des hydrures de silicium, des hydrures d'étain ainsi que des combinaisons de ceux-ci.

9. Capuchon selon la revendication 7 ou 8, dans lequel la substance active est sélectionnée dans le groupe comprenant l'hydrure de sodium, l'hydrure de lithium, le borohydrure de sodium, le sodium métal, le lithium métal, le potassium métal, l'hydrure de calcium, l'hydrure de magnésium, l'hydrure d'aluminium et lithium ainsi que des combinaisons de ceux-ci.

10. Capuchon selon l'une quelconque des revendications 1 à 9, dans lequel la couche active (11) comprend une matrice polymère.

11. Capuchon selon la revendication 10, dans lequel la matrice polymère comprend un polyéthylène.

12. Capuchon selon la revendication 10 ou 11, dans lequel la matrice polymère comprend un copolymère d'éthylène acétate de vinyle.

13. Capuchon selon l'une quelconque des revendications 10 à 12, dans lequel la matrice polymère comprend un élastomère thermoplastique.

14. Capuchon selon la revendication 13, dans lequel l'élastomère thermoplastique comprend un mélange de polyoléfines.

15. Capuchon selon la revendication 13, dans lequel l'élastomère thermoplastique comprend du SEBS.

16. Capuchon selon l'une quelconque des revendications 1 à 15, dans lequel la dureté de la couche active (11) n'est pas inférieure à une dureté Shore A de 40.

17. Capuchon selon l'une quelconque des revendications 1 à 16, dans lequel la garniture (1) comprend un polyéthylène.

18. Capuchon selon l'une quelconque des revendications 1 à 17, dans lequel la garniture (12) comprend un élastomère thermoplastique.

19. Capuchon selon la revendication 18, dans lequel l'élastomère thermoplastique comprend un mélange de polyoléfines.

20. Capuchon selon la revendication 18, dans lequel l'élastomère thermoplastique comprend du SEBS.

21. Capuchon selon l'une quelconque des revendications 1 à 20, dans lequel la garniture (12) comprend un copolymère d'éthylène acétate de vinyle.

22. Capuchon selon l'une quelconque des revendications 1 à 21, dans lequel la coque (10) est constituée d'un matériau polymère comprenant une polyoléfine.

23. Capuchon selon l'une quelconque des revendications 1 à 22, dans lequel le matériau constituant la garniture (12) et le matériau constituant la coque (10) du capuchon comprennent, ou sont constitués d'au moins un polymère identique.

24. Capuchon selon l'une quelconque des revendications 1 à 23, dans lequel la garniture (12) est uniquement lié thermiquement à la coque (10) du capuchon et à la couche active (11).

25. Capuchon selon l'une quelconque des revendications 1 à 24, dans lequel la coque (10), la couche active (11) et la garniture (12) présentent respectivement trois couleurs différentes dans le but de les différencier visuellement.

26. Capuchon selon l'une quelconque des revendications 1 à 25 présentant une densité inférieure à 1.

27. Ensemble comprenant un récipient de plastique et un capuchon de fermeture, dans lequel le capuchon de fermeture (1) est du type défini dans l'une quelconque des revendications précédentes.

28. Ensemble selon la revendication 27, dans lequel le récipient de plastique et/ou le capuchon de fermeture (1) comprend un catalyseur pour favoriser une réaction entre l'hydrogène moléculaire et l'oxygène moléculaire.
